# EUROPÄISCHE PATENTSCHRIFT

(11) **EP 0 767 017 B1**
(45) Veröffentlichungstag und Bekanntmachung des Hinweises auf die Patenterteilung: **28.11.2001**
(21) Anmeldenummer: 96115786.4
(22) Anmeldetag: 02.10.1996
(51) Int. Cl.: B21D 28/22

(54) **Nutenstanzmaschine**
Notching press
Machine à poinçonner des entailles

(30) Priorität: 07.10.1995 DE 19537475
(43) Veröffentlichungstag der Anmeldung: 09.04.1997
(73) Patentinhaber: Schuler Pressen GmbH & Co. KG, 73033 Göppingen (DE)
(72) Erfinder: Bareis, Alfred, 73066 Uhingen (DE); Elsässer, Helmut, 73035 Göppingen (DE); Kurz, Otto, 73110 Hattenhofen (DE); Mühlhäuser, Wolfgang, 73098 Rechberghausen (DE); Pick, Gerhard, 73116 Wäschenbeuren (DE)

(56) Entgegenhaltungen:
- EP-A- 0 171 700
- EP-A- 0 307 080
- DE-A- 2 353 730
- DE-A- 2 411 439
- DE-A- 2 604 639
- DE-A- 2 919 687
- DE-A- 3 429 692

## Beschreibung

Die Erfindung betrifft eine Nutenstanzmaschine insbesondere zum Stanzen von Stator-, Rotor-, Kern- und dergl. genuteten Blechen für elektrische Maschinen sowie Transformatoren.

Eine solche Maschine gemäß Oberbegriff von Anspruch 1 ist der DE-A-2 411 439 zu entnehmen.

Zur Herstellung von genuteten Stator- und Rotorblechen für elektrische Maschinen sowie Transformatorenblechen sind aus der Praxis unterschiedliche Verfahren bekannt. Bei einem dieser Verfahren werden ein einzelnes Stator- und Rotorblech schrittweise durch Stanzen aus einem einzelnen Blechrohling erhalten. Bei der Durchführung dieses Verfahrens werden die einzelnen Nuten des jeweiligen zu dem späteren Stator- oder Rotorblech gehörigen Abschnittes des Rohlings nacheinander gestanzt.

Eine zur derartigen Herstellung von Stator- und Rotorblechen eingerichtete Nutenstanzmaschine ist aus der DE-A-29 19 687 bekannt. Diese Nutenstanzmaschine weist eine ortsfest gelagerte Nutenstanze mit auswechselbaren Werkzeugen auf, der ein Teilapparat zugeordnet ist. Der Teilapparat dient der Halterung eines zu bearbeitenden Werkstückes, das durch eine scheibenförmige Platine (Blechrohling) gebildet wird. Die scheibenförmige Platine ist von dem Teilapparat in einer horizontalen Ebene gehalten und um eine Vertikalachse drehbar gelagert. Der Teilapparat verstellt das Werkstück in Schritten um die Vertikalachse, wobei die Nutenstanze nach jedem Verstellschritt eine Nut stanzt. Zur Anpassung an unterschiedliche Blech- oder Werkstückdurchmesser ist der Teilapparat von der Nutenstanze weg und auf diese zu verstellbar gelagert.

Wenn sehr kleine Stator- und Rotorbleche zu stanzen sind, muß der Teilapparat sehr nahe an die Nutenstanze herangefahren werden. Dies kann die Zugriffsmöglichkeiten eines Bedieners auf das Werkstück beeinträchtigen.

Aus der DE-C2-26 04 639 ist eine Werkzeuganordnung zum Herstellen von genuteten Blechsegmenten bekannt, die eine ortsfest gelagerte Nutenstanze mit daran befestigtem ortsfesten Maschinenbett aufweist. Auf dem Maschinenbett sitzt auf die Nutenstanze zu und von dieser weg verstellbar ein Teilapparat zur Halterung und winkelmäßigen Einstellung des zu stanzenden Kernbleches.

Bei dieser prinzipiell mit der vorstehend beschriebenen Nutenstanzmaschine übereinstimmenden Anordnung erstreckt sich das Maschinenbett relativ weit von der Nutenstanze weg. Das Maschinenbett erschwert somit den Zugang zu dem Werkstück.

Darüber hinaus hat es sich bei Nutenstanzmaschinen mit verstellbarem Teilapparat als schwierig herausgestellt, Kernbleche mit höherer Genauigkeit zu fertigen. Nutenstanzmaschinen arbeiten häufig mit relativ großen Stanzfrequenzen. Dabei werden relativ große Massen ständig wiederholend sehr stark beschleunigt und wieder abgebremst. Die hohe Arbeitsgeschwindigkeit ist erforderlich, um auch bei seriellem, d.h. nacheinander stattfindenden, Stanzen einzelner Nuten einen hohen Ausstoß zu erreichen. Andererseits ist jedoch eine Bearbeitungsgenauigkeit, die im Einzelfall im Mikrometerbereich liegen kann, gewünscht, wobei die Stator- oder Rotorbleche möglichst ohne Nachbearbeitung verwendbar sein sollen. Die Bearbeitungsgenauigkeit soll dabei möglichst ohne Nachjustagen dauerhaft sichergestellt sein.

Darüber hinaus ist es erforderlich, daß die Nutenstanzmaschine möglichst auf einfache Weise an unterschiedliche Stator- oder Rotorblechgrößen und -formen angepaßt werden kann.

Davon ausgehend ist es Aufgabe der Erfindung, eine Nutenstanzmaschine zu schaffen, die auf einfache Weise an unterschiedliche Stator- und Rotorblechgrößen anpaßbar ist und dabei einen hohen Produktionsausstoß sowie eine gute Bearbeitungsgenauigkeit ermöglicht.

Diese Aufgabe wird durch eine Nutenstanzmaschine mit den Merkmalen des Patentanspruches 1 gelöst.

Die Nutenstanzmaschine weist ein Maschinenbett auf, auf dem eine vorzugsweise als Teilapparat ausgebildete Werkstückhalteeinrichtung ortsfest gelagert ist. Die Stanzeinrichtung hingegen ist auf dem Maschinenbett verstellbar gelagert und ist somit auf den Teilapparat zu und von diesem weg verschiebbar. Durch die Möglichkeit, den Abstand zwischen dem Teilapparat und der Stanzeinrichtung einzustellen, können Werkstücke unterschiedlichen Durchmessers bearbeitet werden. Das Werkstück ist dabei an immer gleicher Stelle an dem ortsfest gelagerten Teilapparat aufgespannt, so daß auch Stator- oder Rotorbleche mit geringem Durchmesser leicht zugänglich sind.

Die Stanze der Nutenstanzmaschine ist während des Betriebes des Schnitt- bzw. Stanzvorganges schwimmend gelagert.

Zur Bearbeitung dieser Werkstücke wird die Stanzeinrichtung näher an den Teilapparat herangefahren, während sie ansonsten weiter von diesem weg angeordnet ist. Der Teilapparat wird durch einen mit entsprechenden Spannmitteln versehenen Maschinentisch gebildet und ändert seine Position bei der Einstellung der Werkstücksgröße nicht.

Die Stanzeinrichtung stützt sich über eine reibungsarme und steife Lagereinrichtung an dem Maschinenbett ab. Durch die geringe Reibung, insbesondere eine geringe Haftreibung, wird eine sehr genaue Einstellung des Abstandes zwischen der Stanzeinrichtung und dem Maschinentisch ermöglicht. Dadurch wird die Voraussetzung für eine hohe Verarbeitungsgenauigkeit am Werkstück geschaffen. Die Steifigkeit der Lagereinrichtung schafft die Voraussetzung für eine hohe Arbeitsgeschwindigkeit der Stanzeinrichtung, die mit hohen Massebeschleunigungen, Beschleunigungskräften und davon ausgehenden Stoßbelastungen der Lagereinrichtung einhergeht.

Schließlich ist zur Einstellung der Entfernung zwischen dem Maschinentisch und der Stanzeinrichtung ein Getriebemittel vorgesehen, das in geringem Abstand zu dem Werkstück zwischen der Stanzeinrichtung und dem Maschinentisch angeordnet ist. Das Getriebemittel bestimmt den Abstand zwischen der Stanzeinrichtung und dem Maschinentisch. Vibrationen oder anderweitige Deformationen des Maschinenbettes, des Maschinentisches und insbesondere der Stanzeinrichtung beeinflussen den eingestellten Abstand nahezu nicht. Verwerfungen oder Durchbiegungen des Maschinenbettes, bspw. als Folge einer Erwärmung des Maschinenbettes an seiner Oberseite, wenn seine Unterseite kühl bleibt, führen nicht zu einer entsprechenden Abstandsänderung der Stanzeinrichtung von dem Maschinentisch. Der Abstand wird vielmehr von dem Getriebemittel bestimmt. Sonstige, durch Kräfte oder durch Wärmeeinwirkung hervorgerufene, Längenänderungen gleichen sich über die Lagereinrichtung aus und beeinträchtigen die Genauigkeit bei der Herstellung der Kernbleche somit wenig oder nicht.

Das Getriebemittel kann als Gewindespindel, vorzugsweise als Kugelgewindespindel, ausgebildet sein. Durch mechanische Vorspannung kann diese spielfrei und reibungsarm ausgebildet werden. Die Kugelgewindespindel ist dabei bspw. an der Werkstückhalteeinrichtung drehbar gelagert, wobei eine Kugelumlaufmutter mit der Stanzeinrichtung verbunden ist. Der Abstand zwischen der drehbaren endseitigen Lagerung der Kugelgewindespindel und der Mutter definiert dabei die wirksame Länge des Getriebemittels oder, im konkreten Fall, der Gewindespindel. Wenn diese wirksame Länge mit dem Abstand der Drehachse des Teilapparates (Werkstückhalteeinrichtung) und dem die Nuten stanzenden Stanzwerkzeug übereinstimmt, kann der Einfluß von Temperaturänderungen auf die Bearbeitungsgenauigkeit verringert werden. Bei gleicher Temperaturänderung des Werkstückes und der Spindel sind auch deren Längenänderungen etwa gleich, so daß der Stanzvorgang mit guter Genauigkeit an der dafür vorgesehenen Stelle erfolgt.

Das Getriebemittel, insbesondere die Gewindespindel, ist derart angeordnet daß sie während des Betriebes der Stanzmaschine Umgebungstemperatur annehmen kann. Dies kann erreicht werden, indem das Getriebemittel oder die Gewindespindel exponiert, d.h. der Umgebungsluft ausgesetzt, angeordnet ist. Zusätzlich ist das Getriebemittel gegen Wärmequellen der Stanzmaschine isoliert. Eine Isolierung kann bspw. schon dadurch erreicht werden, daß auf eine massive Verbindung zwischen Wärmequellen und der Kugelumlaufmutter oder eines entsprechenden Getriebeelementes verzichtet wird. Es wird davon ausgegangen, daß Werkstücke aufgrund der Lagerung Umgebungstemperatur aufweisen. Wenn die Kugelgewindespindel ebenfalls Umgebungstemperatur annimmt, besteht Temperaturgleichheit. Temperaturveränderungen im Verlaufe eines Arbeitstages beeinträchtigen damit aufgrund gleichlaufender Längenänderungen die Bearbeitungsgenauigkeit wenig oder nicht.

Wenn die Gewindespindel mit ihrer Längsachse in geringem Abstand zu dem zu bearbeitenden Werkstück angeordnet ist, wird eine besonders steife Kopplung der Stanzeinrichtung an den Teilapparat erreicht. Der Abstand zwischen beiden ist von Schwingungen und Deformationen der übrigen Nutenstanzmaschine weitgehend unbeeinflußt.

Obwohl es prinzipiell möglich ist, einen mittels der Gewindespindel oder allgemein des Getriebemittels eingestellten Abstand durch Fixierung der Stanzeinrichtung an dem Maschinenbett festzulegen, ist es doch vorteilhaft, wenn das Getriebemittel, d.h. insbesondere die Kugelgewindespindel, blockierbar ausgelegt ist. Dazu kann eine steuerbare Bremseinrichtung dienen, die auf die Gewindespindel wirkt. Längenänderungen oder Verbiegungen des Maschinenbettes bewirken dann keine Abstandsänderung zwischen Stanzeinrichtung und Werkstückhalteeinrichtung (Teilapparat).

Die Leistungsfähigkeit dieser Bremseinrichtung sollte derart bemessen sein, daß die Gewindespindel bei betätigter Bremseinrichtung unverdrehbar gehalten ist. Stöße oder Vibrationen, die durch den Betrieb der Nutenstanzeinrichtung auftreten, müssen sicher aufgenommen werden, ohne daß ein Verdrehen der Gewindespindel eintritt. In diesem Fall ist der Abstand zwischen Teilapparat und Nutenstanzeinrichtung und damit der Radius der zu stanzenden Nuten zuverlässig und genau eingestellt.

Wenn als Bremseinrichtung eine Scheibenbremse mit Federspeicher angewendet wird, die vorzugsweise elektrisch lösbar ist, ist eine besonders steife und präzise Blockierung der Gewindespindel erreichbar. Die Betätigung von Bremsbacken, die zu der Scheibenbremse gehören, erfolgt orthogonal zu der Drehrichtung, so daß eine einmal eingestellte Drehstellung der Gewindespindel durch die Betätigung der Bremsbacken nicht verlagert oder verschoben wird.

Für die Realisierung der steifen und reibungsarmen Lagereinrichtung haben sich insbesondere Wälzlager mit zusätzlicher Aussteifung bewährt. Die vorzugsweise als Rollenführung ausgebildete Lagereinrichtung ermöglicht ein reibungsarmes und insbesondere nahezu haftreibungsfreies Verschieben der Stanzeinrichtung auf dem Maschinenbett. Zur Aussteifung der Lagereinrichtung sind zusätzliche Gleitelemente vorgesehen, die bei außer Betrieb befindlicher. Stanzeinrichtung in geringem Abstand zu entsprechenden Gleitbahnen stehen oder ohne Andrückkraft an diesen anliegen. Dieses somit zwischen den Gleitelementen und den Gleitbahnen meist vorhandene geringe Spiel bewirkt, daß beim Verschieben der Stanzeinrichtung nahezu keine Reibung auftritt. Andererseits führen Vibrationen, die durch den Betrieb der Stanzeinrichtung hervorgerufen werden, zu elastischen Verformungen der Rollen oder sonstiger Wälzkörper. Dabei setzen die Gleitelemente auf den Gleitbahnen auf und/oder werden an diese angedrückt, was einerseits eine steife Ankopplung der Stanzeinrichtung an das Maschinenbett bedingt und andererseits die Wälzkörper entlastet. Dies verhindert eine Zerstörung der Wälzkörper und eine Deformierung der Laufbahnen.

In der Zeichnung ist ein Ausführungsbeispiel der Erfindung dargestellt. Es zeigen:
- Fig.1: eine Nutenstanzmaschine zum Stanzen von Stator- oder Rotorblechen für elektrische Maschinen, in Seitenansicht und in schematisierter Prinzipdarstellung,
- Fig. 2: einen auf der Nutenstanzmaschine nach Fig. 1 zu bearbeitenden Rohling für Stator- oder Rotorbleche für elektrische Maschinen, in Draufsicht und in einem anderen Maßstab,
- Fig. 3: einen aus dem Rohling nach Fig. 2 ausgestanzten Satz von Stator- oder Rotorblechen, in schematisierter Darstellung und in Draufsicht, und
- Fig. 4: eine zu der Nutenstanzmaschine nach Fig. 1 gehörige steife und reibungsarme Lagereinrichtung, in schematisierter Seitenansicht und in einem anderen Maßstab.

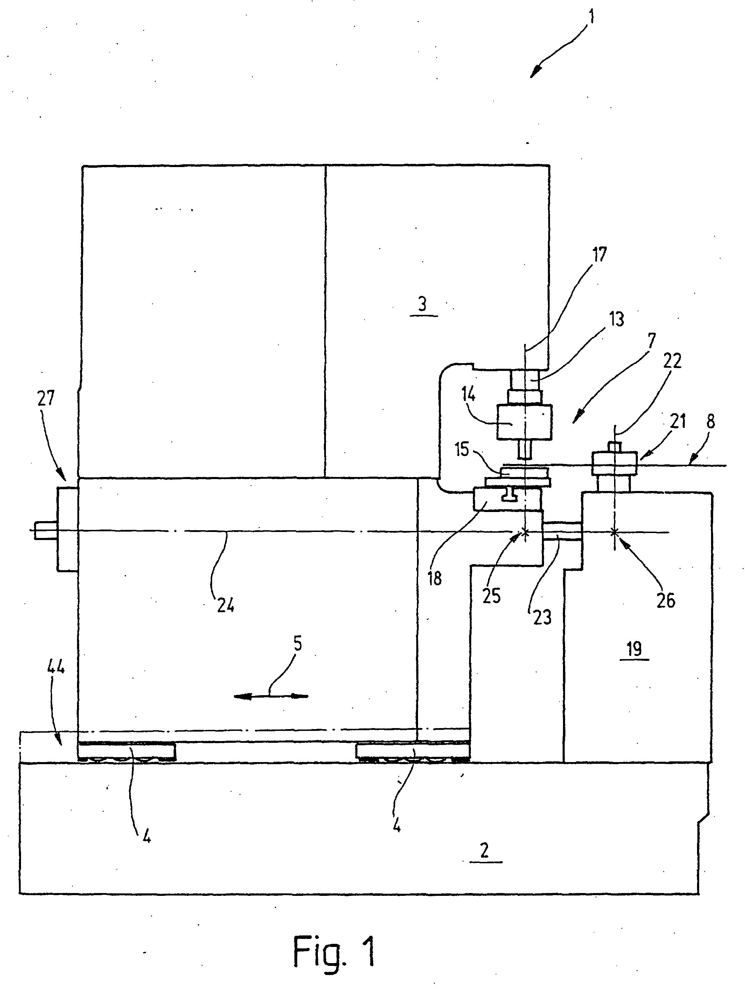

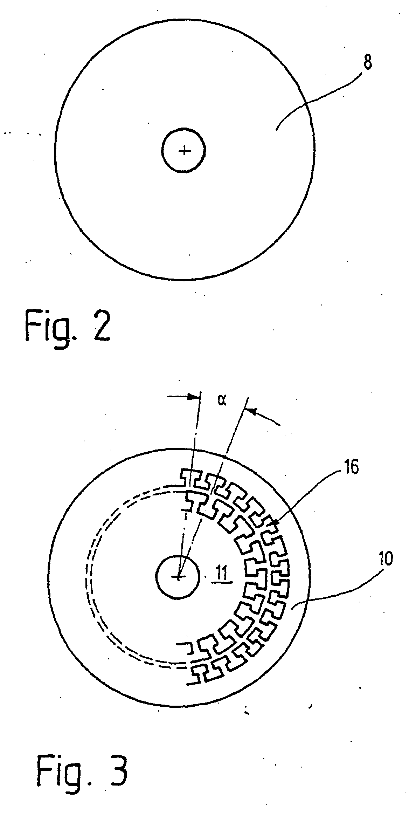

In Fig. 1 ist schematisiert eine Nutenstanzmaschine 1 zum Stanzen von Stator- oder Rotorblechen für elektrische Maschinen dargestellt, wie sie aus der Fig. 3 hervorgehen. Die Nutenstanzmaschine 1 weist eine auf einem Maschinenbett 2 gelagerte Stanze 3 auf. Diese ist über Lagereinrichtungen 4 auf dem Maschinenbett 2 abgestützt und in durch den Pfeil 5 bezeichneter Richtung verfahrbar.

Die Stanze 3 ist an ihrer in Fig. 1 rechts dargestellten Vorderseite mit einem Stanzwerkzeug 7 versehen, das dazu dient, in einer Folge von Stanzvorgängen aus einem in Fig. 2 dargestellten Rohling 8 die in Fig. 3 dargestellten Bleche, nämlich ein Statorblech 10 und ein Rotorblech 11, auszubilden. Dazu weist das Stanzwerkzeug 7 ein an einem Stößel 13 befestigtes Oberwerkzeug 14 und ein Unterwerkzeug 15 auf. Das Oberwerkzeug 14 und das Unterwerkzeug 15 sind komplementär zueinander ausgebildet und sie weisen die Außenkontur der aus Fig. 3 ersichtlichen, aus dem Rohling 8 auszustanzenden Ausnehmungen 16 auf.

Während der Stößel 13 mit dem Oberwerkzeug 14 entlang einer Achse 17 periodisch auf und ab bewegt wird, ist das Unterwerkzeug 15 auf einem entsprechenden Tisch 18 bezüglich der Stanze 3 ortsfest gelagert.

Zur Halterung des Rohlings 8 bzw. der teilweise fertig bearbeiteten Kernbleche ist der in Fig. 1 rechts dargestellten Vorderseite der Stanze 3 gegenüberliegend ein Teilapparat 19 angeordnet, der fest mit dem Maschinenbett 2 verbunden ist und als Werkstückhalteeinrichtung dient. Der Teilapparat 19 weist eine Spannvorrichtung 21 zur Aufnahme des Rohlings 8 auf. Die Spannvorrichtung 21 ist um eine parallel zu der Achse 17 angeordnete Vertikalachse 22 drehbar gelagert. Der Teilapparat 19 ermöglicht somit eine Drehung des Rohlings 8 um die Vertikalachse 22 und ein Weiterschalten des Rohlings 8 durch ausgewählte Winkelstellungen zwischen Pressenhüben.

Der Bearbeitungsdurchmesser der zu bearbeitenden Rohlinge 8, d.h. der Abstand zwischen der Achse 17 und der Vertikalachse 22, wird durch Verstellen der Stanze 3 in Richtung des Pfeiles 5 vorgenommen. Entsprechend wird die Stanze 3 auf dem Maschinenbett 2 an den Teilapparat 19 heran oder von diesem weg verfahren. Zur Einstellung des Abstandes zwischen der Stanze 3 und dem Teilapparat 19 und somit des Abstandes zwischen der Achse 17 und der Vertikalachse 22 ist ein Linearantrieb vorgesehen. Als Linearantrieb wird bei dem vorliegenden Ausführungsbeispiel eine vorgespannte spielfreie Kugelgewindespindel 23 verwendet, die in Fig. 1 durch ihre horizontale Drehachse 24 angedeutet ist. Die Drehachse 24 schneidet die Achse 17 und die Vertikalachse 22 jeweils im rechten Winkel bei Schnittpunkten 25, 26. Nahe dem Schnittpunkt 26 ist die Kugelgewindespindel 23 drehbar gelagert. Nahe dem Schnittpunkt 25 ist eine mit der Stanze 3 verbundene, nicht weiter dargestellte Kugelgewindespindel angeordnet. Der Abstand zwischen der drehbaren Lagerung (Schnittpunkt 26) und der Kugelumlaufmutter (Schnittpunkt 25) ist im wesentlichen gleich dem Abstand zwischen der Achse 17 und der Vertikalachse 22.

Die Kugelgewindespindel 23 ist mit einem Handrad oder mit einem elektrischen Stellantrieb verbunden, der eine gezielte Verdrehung und damit eine Einstellung des Abstandes zwischen der Stanze 3 und dem Teilapparat 19 ermöglicht. Zu der nicht weiter dargestellten Antriebseinrichtung gehört eine Scheibenbremse 27, die auf ihre Brems- oder Blockierstellung federnd vorgespannt ist. Eine elektrische Löseeinrichtung ermöglicht ein gezieltes Freigeben der Scheibenbremse 27.

Die insoweit beschriebene Nutenstanzmaschine 1 arbeitet wie folgt:

Nach Einlegen eines scheibenförmigen Rohlinges 8 in die Spannvorrichtung 21 und Festspannen in dieser wird die Stanze 3 in Betrieb gesetzt. Dadurch wird der Stößel 13 mit hoher Geschwindigkeit abgesenkt und das Oberwerkzeug 14 stanzt eine erste Ausnehmung in den Rohling 8. Sobald der Stößel 13 in einer Gegenbewegung so weit zurückgefahren ist, daß das Oberwerkzeug 14 aus dem Unterwerkzeug 15 und dem Rohling 8 herausgefahren ist, dreht der Teilapparat 19 den Rohling 8, um einen Teilungswinkel α weiter, der aus Fig. 3 hervorgeht. In dieser Winkelstellung stanzt der Stößel 13 mit dem Oberwerkzeug 14 eine zweite Nut in den Rohling 8. Dieser Vorgang wird in schneller Folge wiederholt, bis alle Nuten gestanzt sind und somit das Statorblech 10 von dem Rotorblech 11 getrennt ist. Aufgrund der hohen Arbeitsgeschwindigkeit der Stanze 3 erfolgt der vorstehend beschriebene Vorgang in sehr kurzer Zeit.

Das Stanzen der weiteren Nuten erfolgt entsprechend mit den zugehörigen Teilungswinkeln.

Ein Einrichten der Nutenstanzmaschine 1 auf unterschiedliche Kernblechgrößen erfolgt durch Verdrehen der Kugelgewindespindel 23. Dazu wird die Scheibenbremse 27 durch entsprechende Ansteuerung gelöst und der elektrische Antrieb wird so angesteuert, daß der Abstand zwischen der Achse 17 und der Vertikalachse 22 den gewünschten Bearbeitungsradius annimmt. Dieses kann bspw. der Luftspaltradius der herzustellenden Kernbleche sein. Nach erfolgter Verstellung wird die Scheibenbremse 27 angezogen, wodurch der Abstand zwischen der Stanze 3 und dem Teilapparat 19 fixiert ist.

Bei der Abstandsverstellung rollt die Stanze 3 mit ihren Lagereinrichtungen 4 auf dem Maschinenbett 2 reibungsarm und nahezu haftreibungsfrei. Auch nach erfolgter Blockierung der Kugelgewindespindel 23 ist die Stanze 3 nicht fest an das Maschinenbett 2 gebunden. Der Abstand zwischen der Achse 17 und der Vertikalachse 22 wird allein durch die Kugelgewindespindel 23 definiert.

Die als Abstand zwischen den Schnittpunkten 25, 26 definierte aktive Länge der Kugelgewindespindel 23 stimmt im wesentlichen mit dem Bearbeitungsradius (Luftspaltradius) der Stator- und Rotorbleche überein. Dies hat zur Folge, daß Temperaturveränderungen für die Bearbeitungsgenauigkeit ohne Einfluß sind, sofern nur die Kugelgewindespindel 23 und der Rohling 8 eine im wesentlichen gleiche Temperatur aufweisen. Um dies sicherzustellen, liegt die Kugelgewindespindel 23 über nahezu ihre gesamte aktive Länge oder wenigstens einen wesentlichen Abschnitt derselben frei. In diesem Bereich steht die Kugelgewindespindel mit Umgebungsluft in Verbindung und nimmt im wesentlichen deren Temperatur an. Die zu bearbeitenden Werkstücke (Rohlinge 8) haben infolge der üblicherweise erfolgenden Lagerung in der Nähe der Nutenstanzmaschine 1 die gleiche Temperatur. Nimmt bspw. im Verlaufe eines Arbeitstages die Umgebungstemperatur zu, erwärmen sich die Kugelgewindespindel 23 und die Rohlinge 8 gleichermaßen, wodurch der Abstand zwischen der Achse 17 und der Vertikalachse 22 in dem gleiches Maße zunimmt, wie sich die Rohlinge 8 ausdehnen. Es wird dadurch eine hohe Bearbeitungsgenauigkeit sichergestellt. Es können damit Stator- und Rotorbleche gefertigt werden, die ohne Nacharbeit verwendbar sind.

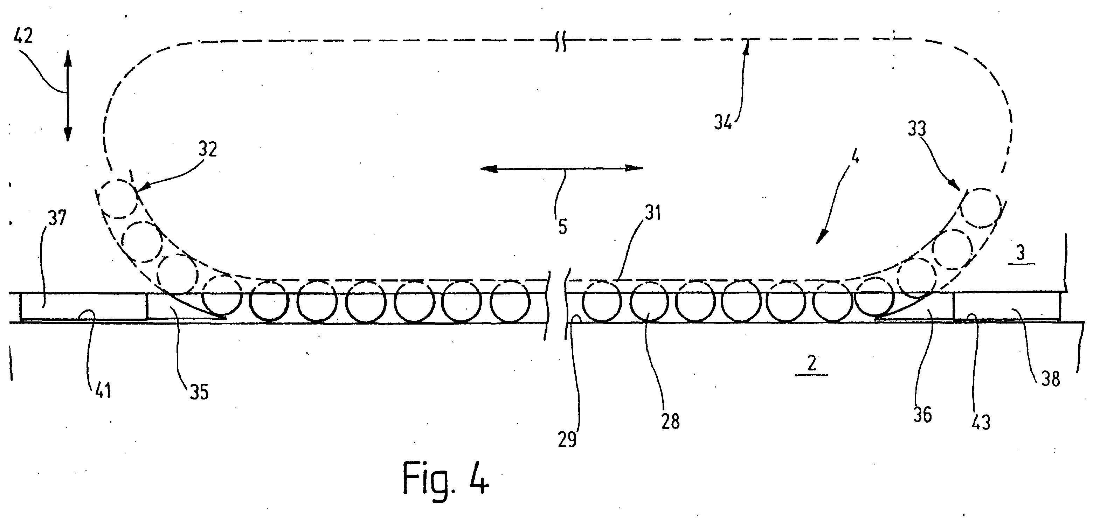

Die Lagereinrichtung 4 ist im einzelnen in Fig. 4 dargestellt. Es handelt sich bei der Lagereinrichtung 4 um eine kombinierte Wälz-Gleitlagereinrichtung. Als Wälzkörper dienen Rollen 28, die auf einer auf dem Maschinenbett 2 vorgesehenen Laufbahn 29 laufen. Die Stanze 3 ist an ihrer Unterseite ebenfalls mit einer Rollenlaufbahn 31 versehen, die auf den Rollen 28 ruht. Die Rollenlaufbahn 31 ist über entsprechende Umleitkanäle 32, 33 und einen lediglich symbolisch angedeuteten Rollenrückführungskanal 34 zu einem Umlauf geschlossen. Zum Ein- und Ausleiten der Rollen 28 in die und aus den Umleitkanälen 32, 33 dienen Formstücke 35, 36, die zu beiden Enden der Laufbahn 31 angeordnet sind.

Zusätzlich zu dem insoweit gebildeten Rollenumlauf-Wälzlager sind zu beiden Seiten Gleitelemente 37, 38 angeordnet, die jeweils fest mit entsprechenden Teilen der Stanze 3 verbunden sind. Das Gleitelement 37 weist eine der plan ausgebildeten Laufbahn 29 in geringem Abstand gegenüberliegende ebene Unterseite 41 auf. Zwischen der Unterseite 41 und der Laufbahn 29 ist ein Spalt von etwa zwei Hundertstel Millimetern vorhanden. In Vertikalrichtung, die in Fig. 4 durch einen Pfeil 42 angedeutet ist, ist das Gleitelement 37 äußerst steif. Seine Steifigkeit ist erheblich größer als die der die Stanze 3 tragenden Rollen 28.

Gleiches gilt für das Gleitelement 38, das mit seiner Unterseite 43 in geringem Abstand zu der Laufbahn 29 angeordnet ist.

Mittels einer in Fig. 1 lediglich schematisch angedeuteten Schmiereinrichtung 44, die im einfachsten Falle durch eine Ölwanne gebildet sein kann, wird den Lagereinrichtungen 4 im Überfluß Öl zugeführt. Insbesondere der zwischen den Gleitelementen 37, 38 und der Laufbahn 29 jeweils ausgebildete Spalt ist mit Öl gefüllt. Die Schmiereinrichtung kann auch anderweitig ausgebildet sein, wobei zum Erzielen von guten Dämpfungseigenschaften jedoch wenigstens der Spalt Öl führen soll.

Die insoweit beschriebene Lagereinrichtung 4 ist sowohl reibungsarm und nahezu haftreibungsfrei in Richtung des Pfeiles 5 bewegbar als auch sehr steif. Die Unterseiten 41, 43 der Gleitelemente 37, 38 liegen nicht an der Laufbahn 29 an und sind insbesondere nicht an diese angedrückt. Das Gewicht der Stanze 3 lastet allein auf den sich ihrerseits an der Laufbahn 29 abstützenden Rollen 28.

Die bei Betrieb der Stanze 3 auftretenden starken Stoßbelastungen in Richtung des Pfeiles 42 werden jedoch von den Gleitelementen 37, 38 aufgefangen. Der zwischen den Unterseiten 41, 43 und der Laufbahn 29 gebildete enge, ölgefüllte Spalt, der im Höchstfalle wenige Hundertstel Millimeter beträgt, koppelt die Stanze 3 steif an das Maschinenbett 2. Die Ölfüllung ist durch Druckbelastung (jedenfalls kurzfristig) nicht verdrängbar. Beide Spalte sind deshalb in Vertikalrichtung (Pfeil 42) ausgesprochen unnachgiebig. Auftretende Stoßbelastungen werden von den Gleitelementen 37, 38 aufgefangen, ohne daß die Rollen 28 übermäßig belastet würden. Insbesondere wird vermieden, daß periodisch wiederkehrende Belastungen der Rollen 28 zu einer Deformation der Laufbahn 29 führen.

Auch während des Betriebs der Stanze 3 ist eine Verlagerung der Stanze 3 in Bezug auf das Maschinenbett 2 in Richtung des Pfeiles 5 möglich. Solche Verlagerungen können infolge von Wärmedehnungen, Verbiegungen des Maschinenbettes, bspw. durch ungleichmäßige Erwärmung oder ähnliches, auftreten. Eine Verschiebung der Nutenstanze in Bezug auf das Maschinenbett ist nicht blockiert sondern dient dem Ausgleich von auftretenden Spannungen. Der Abstand zwischen der Vertikalachse 22 und der Achse 17 des Stanzwerkzeuges 7 wird jedoch ungeachtet dessen allein durch die Gewindespindel 23 bestimmt, was die Genauigkeit des Bearbeitungsvorganges sicherstellt.

Insbesondere zur Herstellung von Stator- und Rotorblechen 10, 11 für elektrische Maschinen ist eine Nutenstanzmaschine 1 vorgesehen, die die erforderlichen Nuten nacheinander in einen scheibenförmigen Rohling 8 einstanzt. Die Nutenstanzmaschine weist ein ortsfest aufstellbares Maschinenbett 2 auf, das endseitig einen Teilapparat 19 zur Aufnahme des Rohlings 8 trägt. In Bezug auf den Teilapparat 19 verstellbar ist auf dem Maschinenbett 2 eine Stanze 3 gelagert. Der Abstand zwischen dem Teilapparat 19 und der Stanze 3 ist mittels einer Kugelgewindespindel 23 einstellbar, die zwischen dem Teilapparat und der Stanze 3 wirkt. Die Fixierung eines eingestellten Abstandes erfolgt durch Blockierung der Kugelgewindespindel 23, vorzugsweise mittels einer Scheibenbremse 27. Die Stanze 3 ist mit einer kombinierten Roll-Gleitlagerung auf dem Maschinenbett 2 gelagert, die ein reibungsarmes Verschieben der Stanze 3 ermöglicht und die diese außerdem steif lagert. Die Kombination der reibungsarmen Lagereinrichtung mit der vorzugsweise nahe bei dem Rohling 8 angeordneten Kugelgewindespindel 23 ermöglicht eine präzise Einstellung des gewünschten Bearbeitungsradius und ein dauerhaftes Einhalten desselben. Zur Präzision und zum Ausgleich von Temperaturschwankungen trägt außerdem bei, daß die Kugelgewindespindel 23 in thermischem Kontakt mit der Umgebung, angeordnet ist.

## Patentansprüche

1. Nutenstanzmaschine (1), insbesondere zum Stanzen von Stator- und Rotorblechen für elektrische Maschinen,
mit einem ortsfest lagerbaren längliche Maschinenbett (2), an dessen einem Ende oberseitig eine Werkstückhalteeinrichtung (19) angeordnet ist,
mit an der Werkstückhalteeinrichlung (19) vorgesehenen Spannmitteln (21) zum Aufspannnen und Positionieren von Werkstücken (8),
mit einer Stanzeinrichtung (3), die auf dem Maschinenbett (2) in einer Richtung (5) von der Werkstückhalteeinrichtung (19) weg und auf die Werkstückhalteeinrichtung (19) zu längsverstellbar angeordnet ist und die mit einem Werkzeug (7) zur Bearbeitung des Werkstückes (8) ausrüstbar ist,
mit einer reibungsarmen, steifen Lagereinrichtung (4), die zwischen dem Maschinenbett (2) und der Stanzeinrichtung (3) angeordnet ist,
mit einem Getriebemittel (23) zur Einstellung des Abstandes zwischen der Werkstückhalteeinrichtung (19) und der Stanzeinrichtung (3), das sich mit einem Ende an der Werkstückhalteeinrichtung (19) in der Nähe der Spannmittel (21) und mit seinem anderen Ende an der Stanzeinrichtung (3) in der Nähe des Werkzeuges (7) abstützt, wobei
die Stanzeinrichtung (3) bei im Betrieb arretiertem Getriebemittel (23) schwimmend auf dem Maschinenbett (2) gelagert ist, wobei das Getriebemittel (23) gegen Wärmequellen der Stanzmaschine (1) isoliert ist,
**dadurch gekennzeichnet, dass** das Getriebemittel (23) derart frei angeordnet ist, daß es während des Betriebes der Stanzmaschine (1) Umgebungstemperatur annehmen kann.

2. Nutenstanzmaschine nach Anspruch 1 , **dadurch gekennzeichnet, daß** die Werkstückhalteeinrichtung (19) ein Teilapparat ist, mit dem ein gespanntes Werkstück (8) schrittweise um eine Achse (22) drehbar und wahlweise arretierbar ist.

3. Nutenstanzmaschine nach Anspruch 1 , **dadurch gekennzeichnet, daß** das Getriebemittel (23) eine Gewindespindel ist.

4. Nutenstanzmaschine nach Anspruch 1 , **dadurch gekennzeichnet, daß** das Getriebemittel (23) eine wirksame Länge aufweist, die im wesentlichen mit einem bei der Stanzbearbeitung des Werkstückes einzuhaltenden Sollmaß übereinstimmt.

5. Nutenstanzmaschine nach Anspruch 1 , **dadurch gekennzeichnet, daß** das Getriebemittel (23) an der Stanzmaschine (1) exponiert angeordnet ist.

6. Nutenstanzmaschine nach Anspruch 3 , **dadurch gekennzeichnet, daß** die Gewindespindel (23) mit ihrer Längsachse (24) in geringem Abstand zu dem zu bearbeitenden Werkstück (8) angeordnet ist.

7. Nutenstanzmaschine nach Anspruch 3 , **dadurch gekennzeichnet, daß** die Gewindespindel mit einer steuerbaren Bremseinrichtung (27) verbunden ist.

8. Nutenstanzmaschine nach Anspruch 7 , **dadurch gekennzeichnet, daß** die Leistungsfähigkeit der Bremseinrichtung (27) derart bemessen ist, daß die Gewindespindel bei betätigter Bremseinrichtung (27) auch bei während des Betriebes der Nutenstanzmaschine (1) auftretenden Vibrationen unverdrehbar gehalten ist.

9. Nutenstanzmaschine nach Anspruch 8 , **dadurch gekennzeichnet, daß** die Bremseinrichtung (27) eine Scheibenbremse mit Federspeicher ist.

10. Nutenstanzmaschine nach Anspruch 1 , **dadurch gekennzeichnet, daß** die Lagereinrichtung (4) ein Wälzlager mit einer auf Druck beanspruchbaren Aussteifung ist.

11. Nutenstanzmaschine nach Anspruch 1 , **dadurch gekennzeichnet, daß** die Stanzeinrichtung (3) über die Lagereinrichtung und eine Gleiteinrichtung (37, 38) gelagert ist.

12. Nutenstanzmaschine nach Anspruch 1 , **dadurch gekennzeichnet, daß** die Lagereinrichtung (4) eine Rollenführung mit zusätzlichen Gleitelementen (37, 38) ist.

13. Nutenstanzmaschine nach Anspruch 12, **dadurch gekennzeichnet, daß** die Gleitelemente (37, 38) mit einem Spiel in Bezug auf eine ihnen zugeordnete Gleitbahn (29) angeordnet sind, das geringer ist als die maximal mögliche elastische Verformung der Rollen (28).

## Claims

1. Notching press (1), in particular for punching stator and rotor plates for electric machines, with an elongate press bed (2), which can be mounted in a fixed location and on the upper side of which, at one end, a workpiece-holding device (19) is arranged, with clamping means (21) provided on the workpiece-holding device (19) for clamping and positioning workpieces (8), with a punching device (3), which is arranged on the press bed (2) in such a way that it can be adjusted longitudinally in a direction (5) away from the workpiece-holding device (19) and towards the workpiece-holding device (19), and can be fitted with a tool (7) for acting upon the workpiece (8), with a low-friction rigid bearing device (4), which is arranged between the press bed (2) and the punching device (3), with a gear (23) for adjusting the distance between the workpiece-holding device (19) and the punching device (3), which gear is supported at one end on the workpiece-holding device (19), in the vicinity of the clamping means (21), and at the other end on the punching device (3), in the vicinity of the tool (7), the punching device (3) being supported in a floating manner on the press bed (2) when the gear (23) is locked during operation, the gear (23) being insulated from sources of heat of the notching press (1),
**characterized in that** the gear (23) is arranged so as to be free to such an extent that it can assume ambient temperature during operation of the notching press (1).

2. Notching press according to Claim 1,
**characterized in that** the workpiece-holding device (19) is a dividing apparatus, by means of which a clamped workpiece (8) can be rotated in steps about an axis (22) and optionally locked.

3. Notching press according to Claim 1,
**characterized in that** the gear (23) is a threaded spindle.

4. Notching press according to Claim 1,
**characterized in that** the gear (23) has an effective length that coincides essentially with a nominal dimension to be maintained during the punching of the workpiece.

5. Notching press according to Claim 1,
**characterized in that** the gear (23) is arranged in an exposed manner on the notching press (1).

6. Notching press according to Claim 3,
**characterized in that** the threaded spindle (23) is arranged with its longitudinal axis (24) at a short distance from the workpiece (8) to be acted upon.

7. Notching press according to Claim 3,
**characterized in that** the threaded spindle is connected to a controllable braking device (27).

8. Notching press according to Claim 7,
**characterized in that** the capacity of the braking device (27) is dimensioned in such a way that, with the braking device (27) actuated, the threaded spindle is held nonrotatably even if vibration occurs during the operation of the notching press (1).

9. Notching press according to Claim 8,
**characterized in that** the braking device (27) is a disc brake with a spring accumulator.

10. Notching press according to Claim 1,
**characterized in that** the bearing device (4) is a rolling-contact bearing with a reinforcement that can be subjected to compressive stress.

11. Notching press according to Claim 1,
**characterized in that** the punching device (3) is supported by means of the bearing device and a sliding device (37, 38).

12. Notching press according to Claim 1,
**characterized in that** the bearing device (4) is a roller guide with additional sliding elements (37, 38).

13. Notching press according to Claim 12,
**characterized in that** the sliding elements (37, 38) are arranged with a play, relative to an associated slideway (29), that is less than the maximum possible elastic deformation of the rollers (28).

## Revendications

1. Machine à découper les encoches (1), en particulier pour découper des tôles de stators et de rotors pour machines électriques, comportant
une base de machine (2) de forme allongée, pouvant être disposée en position fixe, à l'une des extrémités de laquelle est disposé, sur le côté supérieur, un dispositif support de pièce à usiner à usiner (19),
des moyens de serrage (21) prévus sur le dispositif support de pièce à usiner (19), destinés à serrer et positionner des pièces à usiner (8),
un dispositif de découpage (3) qui est disposé sur la base de machine (2) mobile en déplacement longitudinal dans une direction (5) qui s'éloigne du dispositif support de pièce à usiner (19) et qui se rapproche du dispositif support de pièce à usiner (19), et qui peut être équipé d'un outil (7) pour le travail de la pièce à usiner (8),
un dispositif d'appui (4) rigide, à faible frottement, qui est disposé entre la base de machine (2) et le dispositif de découpage (3),
un moyen d'entraînement (23) pour le réglage de la distance entre le dispositif support de pièce à usiner (19) et le dispositif de découpage (3), qui prend appui, par une extrémité, sur le dispositif support de pièce à usiner (19) à proximité des moyens de serrage (21) et, par son autre extrémité, sur le dispositif de découpage (3) à proximité de l'outil (7), dans lequel
le dispositif de découpage (3) est monté flottant sur la base de machine (2) lorsque le moyen d'entraînement (23) est immobilisé pendant le fonctionnement,
le moyen d'entraînement (23) étant disposé de façon à être isolé des sources de chaleur de la machine à découper (1),
**caractérisée en ce que** le moyen d'entraînement (23) est disposé libre de telle manière que, pendant le fonctionnement de la machine à découper (1), il puisse prendre la température ambiante.

2. Machine à découper les encoches selon la revendication 1, **caractérisée en ce que** le dispositif support de pièce à usiner (19) est un appareil diviseur avec lequel une pièce à usiner (8) serrée peut être tournée par pas successifs autour d'un axe (22) et être immobilisée sélectivement.

3. Machine à découper les encoches selon la revendication 1, **caractérisée en ce que** le moyen d'entraînement (23) est une broche filetée.

4. Machine à découper les encoches selon la revendication 1, **caractérisée en ce que** le moyen d'entraînement (23) comporte une longueur effective qui coïncide sensiblement avec une cote de consigne à respecter lors du découpage de la pièce à usiner.

5. Machine à découper les encoches selon la revendication 1, **caractérisée en ce que** le moyen d'entraînement (23) est disposé en position exposée sur la machine à découper les encoches (1).

6. Machine à découper les encoches selon la revendication 3, **caractérisée en ce que** la broche filetée (23) est disposée avec son axe longitudinal (24) à petite distance de la pièce à usiner (8).

7. Machine à découper les encoches selon la revendication 3, **caractérisée en ce que** la broche filetée est reliée à un dispositif de freinage pouvant être commandé (27).

8. Machine à découper les encoches selon la revendication 7, **caractérisée en ce que** la puissance du dispositif de freinage (27) est calculée de manière que, lorsque le dispositif de freinage (27) est actionné, la broche filetée est maintenue bloquée en rotation, même en présence de vibrations qui se manifestent pendant la marche de la machine à découper les encoches (1).

9. Machine à découper les encoches selon la revendication 8, **caractérisée en ce que** le dispositif de freinage (27) est un frein à disque pourvu d'un accumulateur à ressort.

10. Machine à découper les encoches selon la revendication 1, **caractérisée en ce que** le dispositif d'appui (4) est un roulement équipé d'un raidisseur pouvant être sollicité à la pression.

11. Machine à découper les encoches selon la revendication 1, **caractérisée en ce que** le dispositif de découpage (3) est monté par l'intermédiaire d'un dispositif de portée et d'un dispositif à glissement (37, 38).

12. Machine à découper les encoches selon la revendication 1, **caractérisée en ce que** le dispositif d'appui (4) est un guidage à rouleaux pourvu d'éléments de glissement additionnels (37, 38).

13. Machine à découper les encoches selon la revendication 12, **caractérisée en ce que** les éléments de glissement (37, 38) sont disposés avec un jeu par rapport à un guide (29) associé à ces éléments qui est plus petit que la déformation élastique maximale possible des rouleaux (28).
